Europäisches Patentamt

European Patent Office

Office européen des brevets

(11) Veröffentlichungsnummer: **0 283 926**
**A2**

(12) **EUROPÄISCHE PATENTANMELDUNG**

(21) Anmeldenummer: **88104220.4**

(22) Anmeldetag: **17.03.88**

(51) Int. Cl.⁴: **B64D 43/00**

(30) Priorität: **25.03.87 DE 3709763**

(43) Veröffentlichungstag der Anmeldung:
**28.09.88 Patentblatt 88/39**

(84) Benannte Vertragsstaaten:
**DE FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Stangl, Ludwig**
**St. Ulrich Strasse 4**
**D-8011 Oberpframmern(DE)**

(54) **Instrumentenpult für einen Flugzeugführerraum.**

㉟ Bei einem Instrumentenpult für einen Flugzeugführerraum mit einem Instrumentenbrett (1) an
einem Gestell (2) auf einem Hohlsockel (3) ist das
Instrumentenbrett (1) eine stirnseitige Abdeckung
des als ein hohles Kastenbauteil gestalteten Gestells
(2) , wobei dessen Querschnittsprofil der Kontur des
Instrumentenbrettes (1) entspricht, um einen
größtmöglichen Freiraum für dessen Instrumentierung auf der Rückseite zu erhalten.

EP 0 283 926 A2

## Instrumentenpult für einen Flugzeugführerraum

Die Erfindung betrifft ein Instrumentenpult gemäß dem Oberbegriff des Patentanspruchs 1.

Bei einem derartigen z.B. durch den MBB-Hubschrauber BO 105 bekannten Instrumentenpult ist das Gestell des Instrumentenbrettes ein an dessen Rückseite angreifendes Gerüst aus Metallprofilen. Abgesehen von einem beträchtlichen Baugewicht steht bei einer solchen Gerüstbauweise nicht nur wenig Raum hinter dem Instrumentenbrett für die Instrumentierung zur Verfügung, sondern sind auch hierdurch den Positionierungsmöglichkeiten für einzelne Instrumente auf dem Instrumentenbrett relativ enge Grenzen gesetzt.

Der Erfindung liegt daher die Aufgabe zugrunde, bei einem Instrumentenpult der eingangs genannten Art den Positionierungsspielraum für die Instrumentierung zu erweitern.

Diese Aufgabe ist gemäß dem Kennzeichen des Patentanspruchs 1 gelöst. Hiernach wird für das Gestell des Instrumentenbrettes auf die Kastenbauweise zurückgegriffen in der Erkenntnis, daß diese die geforderte Trägerfunktion für das Instrumentenbrett zu gewährleisten vermag, ohne, in der gekennzeichneten Anordnung, dem Raumbedarf der Instrumentierung auf dessen Rückseite entgegenzustehen, zumal durch eine bloße Abdeckung auch der rückwärtigen Stirnseite des Gestelles auf gesonderte Verkleidungen der einzelnen Instrumente verzichtet werden kann. Außerdem ermöglicht die Erfindung die Ausbildung des Gestells in sog. Leichtbauweise z.B. aus faserverstärktem Kunststoff, als Sandwichbauteil o. dgl. mit relativ geringem Fertigungsaufwand.

Durch die in den Unteransprüchen gekennzeichneten bevorzugten Ausgestaltungen wird - schließlich verdeutlicht, daß die Erfindung hinsichtlich der Ablesbarkeit, Schwingungsdämpfung und Zugänglichkeit der Instrumentierung ohne Probleme ist.

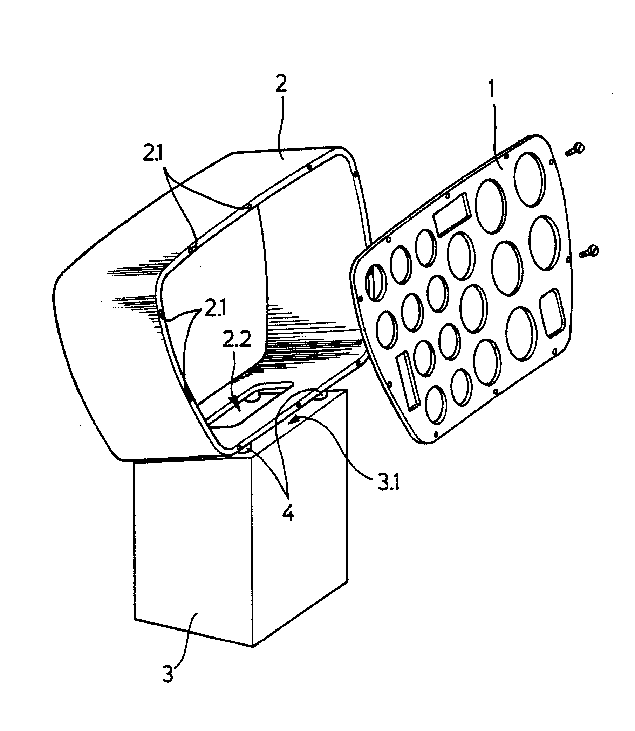

Nachfolgend wird die Erfindung anhand eines Ausführungsbeispiels mit Bezug auf die Zeichnung näher erläutert. Diese zeigt in einer perspektivischen Ansicht ein Instrumentenpult vor der Montage eines Instrumentenbrettes 1, wobei von der Darstellung hierauf zusammenzufassender Anzeigegeräte und Instrumente (für die Überwachung bzw. Führung z.B. eines Hubschraubers durch einen Piloten) abgesehen ist. Da es bei dieser sog. Instrumentierung u.a. auf größtmöglichen Freiraum an der Rückseite des Instrumentenbrettes 1 ankommt, ist hierfür ein Gestell 2 in Form eines hohlen Kastenbauteils vorgesehen. Dabei ist das Instrumentenbrett 1 eine stirnseitige Abdeckung des Gestells 2, dessen Querschnittsprofil daher der Kontur des Instrumentenbrettes 1 entspricht. Zu dessen Befestigung nach dem Aufsetzen auf der vorderen Stirnseite des Gestells 2 kann eine Schraubverbindung gewählt werden, wozu das Gestell 2, beispielsweise als ein gewickelter Faserverbundkunststoffkörper, mit Gewindeeinsätzen 2.1 versehen ist. Entsprechend wird auch das Instrumentenbrett 1 aus einem Faserverbundkunststoff bestehen können.

Damit die Instrumentierung des Instrumentenbrettes 1 leicht und mit der geringstmöglichen Parallaxe ablesbar ist, hat nach Maßgabe der hierfür erforderlichen Neigung des Instrumentenbrettes 1 das Gestell 2 auf seinem Hohlsockel 3 eine geneigte Lage, und zwar infolge einer entprechenden Neigung der Tragplatte 3.1 des Hohlsockels 3. Dabei ist noch zur Schwingungsdämpfung die Verbindung des Gestells 2 mit der Tragplatte 3.1 über beispielsweise mit Schraubbolzen versehene Distanzhalter 4 aus einem dämpfungsfähigen Elastomer o. dgl. gummielastischen Material hergestellt. Schließlich ist wie üblicherweise beim Hohlsockel 3 in dessen Tragplatte 3.1 auch in der Kastenwandung des Gestells 2 ein sockelseitiger Durchbruch 2.2 vorgesehen, um für den elektrischen Anschluß der Instrumentierung vorhandene Leitungen über den Hohlsockel 3 in das Gestell 2 einführen zu können.

Da bei der vorbeschriebenen Gestaltung des Instrumentenbrettes 1 und Gestells 2 auch der Ausbildung des Hohlsockels 3 in sog. Leichtbauweise nichts mehr im Wege steht, leistet mithin die Erfindung zugleich einen beträchtlichen Beitrag zur Reduzierung des Baugewichts insbesondere von Drehflügelflugzeugen. Nach wie vor ist aber die Bedeutung der Erfindung für die Bestückung des Instrumentenbrettes 1 hervorzuheben, dessen Fläche für eine Instrumentierung voll und Je Instrument weitgehend uneingeschränkt nutzbar ist, weil das Gestell 2 als solches hinter dem Instrumentenbrett 1 den größtmöglichen Freiraum beläßt.

## Ansprüche

1. Instrumentenpult für einen Flugzeugführerraum (Cockpit), insbesondere eines Drehflügelflugzeugs, mit einem Instrumentenbrett an einem Gestell auf einem Hohlsockel, dadurch **gekennzeichnet,** daß das Instrumentenbrett (1) eine stirnseitige Abdeckung des als ein hohles Kastenbauteil gestalteten Gestells (2) ist, dessen Querschnittsprofil der Kontur des Instrumentenbrettes (1) entspricht.

2. Instrumentenpult nach Anspruch 1 mit einer Neigung des Instrumentenbrettes, dadurch **gekennzeichnet,** daß das Gestell (2) auf dem Hohlsockel (3) infolge einer Neigung seiner Tragplatte (3.1) eine nach Maßgabe der Neigung des Instrumentenbrettes (1) geneigte Lage einnimmt.

3. Instrumentenpult nach Anspruch 1 oder 2, dadurch **gekennzeichnet,** daß das Gestell (2) mit dem Hohlsockel (3) bzw. dessen Tragplatte (3.1) über schwingungsdämpfende Elemente (4) verbunden ist.

4. Instrumentenpult nach Anspruch 1 oder 2, dadurch **gekennzeichnet,** daß die Kastenwandung des Gestells (2) einen sockelseitigen Durchbruch (2.2) aufweist.